(19) Europäisches Patentamt
European Patent Office
Office européen des brevets

(11) Publication number: **0 272 727 B1**

# (12) EUROPEAN PATENT SPECIFICATION

(45) Date of publication of patent specification: **28.10.92** (51) Int. Cl.[5]: **C08G 67/02**

(21) Application number: **87202327.0**

(22) Date of filing: **24.11.87**

## (54) Novel polymers of carbon monoxide and alpha-olefinically unsaturated compounds.

(30) Priority: **27.11.86 NL 8603015**

(43) Date of publication of application:
**29.06.88 Bulletin 88/26**

(45) Publication of the grant of the patent:
**28.10.92 Bulletin 92/44**

(84) Designated Contracting States:
**AT BE CH DE ES FR GB GR IT LI NL SE**

(56) References cited:
**EP-A- 0 181 014**
**FR-A- 2 213 947**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Drent, Eit**
**Badhuisweg 3**
**NL-1031 CM Amsterdam(NL)**

**EP 0 272 727 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Polymers of carbon monoxide with one or more compounds of the general formula $(CH_2=CR_1)$-$R_2$, wherein $R_1$ and $R_2$ represent hydrogen atoms and/or hydrocarbyl groups, comprise carbonyl groups as functional groups. Therefore they are often referred to as polyketones. These carbonyl groups can be converted at least partly into a variety of other functional groups by means of chemical reaction. This chemical modification leads to changes in the properties of the polymers and renders the latter eligible for uses for which the original polymers were not very or not at all suitable. As examples of chemical reactions to which the polymers can be subjected may be mentioned the conversion into polyamines by way of catalytic hydrogenation in the presence of ammonia, the conversion into polyalcohols by way of catalytic hydrogenation, the conversion into polyphenols by way of condensation with phenols and the conversion into polythiols by way of catalytic hydrogenation in the presence of hydrogen sulphide.

Among the polymers of carbon monoxide with compounds of the general formula $(CH_2=CR_1)$-$R_2$ (for the sake of brevity referred to as A), high molecular weight linear alternating polymers composed of units of the general formula -CO-(A′)-, wherein A′ represents a monomer unit originating in a monomer A used form a special class. Such polymers can be prepared, inter alia, by using catalyst compositions based upon

a) a palladium compound,

b) an anion of an acid with a pKa of less than 6, and

c) either a phosphorus bidentate ligand, or a nitrogen bidentate ligand, which bidentate ligands meet certain structural requirements.

An investigation carried out by the Applicant into these polymers has recently shown that they can be chemically modified by introducing into the monomer mixture from which they are prepared, in addition to carbon monoxide and one or more monomers A, a relatively small quantity of one or more monomers B, chosen from the group composed of the general formulae

$(CH_2=CR_1)OCOR_3$,
$(CH_2=CR_1)COOR_3$,
$(CH_2=CR_1)OR_3$,
$(CH_2=CR_1)N(R_2)COR_4$ ,
$(CH_2=CR_1)CON(R_2)(R_4)$,
$(CH_2=CR_1)OPO(R_3)(OR_5)$ and
$(CH_2=CR_1)PO(OR_3(OR_5)$,

wherein $R_1$ and $R_2$ have the meanings mentioned hereinbefore and $R_3$, $R_4$ and $R_5$ have the following meanings: $R_3$ and $R_5$ are hydrocarbyl groups and $R_4$ is hydrogen atom or a hydrocarbyl group.

The use of the above-mentioned catalyst compositions with such a monomer mixture affords polymers made up of units of the general formula -CO-(A′)- and units of the general formula -CO-(B′)-, wherein B′ represents a monomer unit originating in a monomer B used.

Depending on the nature of the monomers B used, the polymers obtained will, in addition to the carbonyl groups originally present in the polymers, comprise carbonyloxy, ether amide or phosphonate groups as functional groups. As distinct from the chemical modification described hereinbefore, in which at least part of the carbonyl groups present in the polymers are converted into other functional groups, i.e. a chemical modification after the polymerization, the use of monomer of type B as co-monomers can be regarded as a chemical modification in situ, i.e. during the polymerization. Just like the carbonyl groups, the carbonyloxy, ether, amide and phosphonate groups can be converted at least partly into a variety of other functional groups by chemical reaction after the polymerization.

When using the above-mentioned palladium/bidentate catalyst compositions, only a relatively minor quantity of monomer B can be incorporated into the polymers and/or the reaction rates that are achieved are rather low. Attempts at preparing copolymers of carbon monoxide with a monomer B with the aid of these catalyst compositions have thus far remained unsuccessful. Neither has the preparation of terpolymers comprising other polar groups than those mentioned hereinbefore, such as halogen ar cyanide, by polymerizing carbon monoxide with a monomer A and with a polar monomer which, like the monomers B, has a polar group directly linked to the $(CH_2=CR_1)$- group, such as vinyl chloride or acrylonitrile, been successful as yet.

Further research made by the Applicant into this subject has shown that in the polymerization of carbon monoxide with polar monomers by using the above-mentioned palladium/bidentate catalyst compositions, the position which the polar group holds within the polar monomers relative to the $(CH_2=CR_1)$- group is of great importance. It has been found that when in the preparation of terpolymers of carbon monoxide with a

polar monomer and a monomer A use is made of a polar monomer having a bivalent hydrocarbyl bridging group situated between the $(CH_2=CR_1)$- group and the polar group, a higher reaction rate can be attained and/or polymers with higher polar monomer contents can be prepared than when a polar monomer B is used in which the polar group is bound direct to the $(CH_2=CR_1)$- group. It has further been found that not only polar monomers comprising the carbonyloxy, ether, amide and phosphonate groups present in the monomers B as polar groups are suitable for the preparation of terpolymers of carbon monoxide with a monomer A and with a polar monomer having a monovalent polar group bound to the $(CH_2=CR_1)$- group by a bivalent hydrocarbyl bridging group, but that monomers in general, in which a monovalent polar group comprising at least one oxygen, nitrogen, phoshorus and/or halogen atom is present, are eligible. Monomers holding a $(CH_2=CR_1)$- group which is linked to a monovalent polar group comprising at least one oxygen, nitrogen, phoshorus and/or halogen atom by a bivalent hydrocarbyl bridging group, will hereinafter for the sake of brevity be referred to as D. Finally, it has been found that, unlike the use of monomers B, the use of monomers D offers the possibility to prepare linear copolymers with carbon monoxide which are made up of units of the general formula -CO-(D')-, wherein D' represents a monomer unit originating in a monomer D used. If, in addition to carbon monoxide and one or more monomers D, the monomer mixture from which the polymers are prepared also includes one or more monomers A, then linear polymers will be obtained which are made up of units of the general formula -CO-(D')- and units of the general formula -CO-(A')-. Just like the polar groups present in the polymers prepared by using monomers B, the polar groups present in the polymers prepared by using monomers D can be converted into a variety of other functional groups by way of chemical reaction after the polimerization.

The invention provides novel polymers of carbon monoxide with one or more $\alpha$-olefinically unsaturated compounds, wherein

a) the polymers are prepared by the polymerization with one or more compounds (D) comprising a group of the general formula $(CH_2=CR_1)$- which is bound by a bivalent hydrocarbyl bridging group to a monovalent polar group having at least one oxygen, nitrogen phosphorus and/or halogen atom and, optionally also with one or more compounds (A) of the general formula $(CH_2=CR_1)$-$R_2$, in which formulae $R_1$ and $R_2$ represent hydrogen atoms and/or monovalent hydrocarbyl groups

b) the polymers have a linear structure,

c) the polymers are made up of units of the general formula -CO-(D')-and optionally also units of the general formula -CO-(A')-, wherein A' and D' represent monomer units originating in monomers A and D, respectively, used.

The monomers D used in the preparation of the polymers according to the invention preferably comprise a $-(CH_2)_n$-group which preferably contains fewer than 15 and in particular fewer than 10 carbon atoms, as the bivalent hydrocarbyl bridging group. As examples of suitable monovalent polar groups that may be present in the monomer D, the following groups may be mentioned $-OR_2$, $-COR_2$, $COOR_2$, $-OCOR_2$, $-CON(R_2)(R_4)$, $-N(R_2)COR_4$, $-OPO(R_3)(OR_2)$, $-PO(OR_2)(OR_4)$, -CN and -Halogen. Good results have been obtained, inter alia, by using monomers D in which one of the groups -OH, -COOH, $-COOCH_3$, $-OCOCH_3$ and -Cl was present as monovalent polar group.

In the preparation of the polymers the starting mixture is preferably a monomer mixture containing only a single monomer D in addition to carbon monoxide. When in the preparation of the polymers monomers A are employed as well, the starting monomer mixture employed preferably comprises only a single monomer A in addition to carbon monoxide and one monomer D. In addition to one or more monomers D and optionally one or more monomers A, the monomer mixture may comprise if desired, also one or more other monomers, such as monomer B. The monomers A used preferably contain fewer than 10 carbon atoms. Examples of such monomers A are ethene, propene, butene-1, pentene-1, hexene-1, octene-1, styrene, p-methyl styrene and p-ethyl styrene. Preference is given to the use of ethene as monomer A.

As examples of monomers D in which the polar group is an $-OR_2$ group may be mentioned 10-undecenyl alcohol and methyl-(10-undecenyl) ether.

Examples of monomers D in which the polar group is a $-COR_2$ group are 4-pentenal and methyl-(4-butenyl) ketone.

As examples of monomers D in which the polar group is a $-COOR_2$ group may be mentioned 10-undecenoic acid and the methyl ester of this acid.

Examples of monomers D in which the polar group is a $-OCOR_2$ group are allyl acetate and (10-undecenyl) acetate.

As examples of a monomer D in which the polar group is a $-CON(R_2)(R_4)$ group may be mentioned the N,N-dimethyl amide of 4-pentenoic acid.

Examples of monomers D in which the polar group is an $-N(R_2)COR_4$ group are N-(3-butenyl)acetamide and N-methyl,N-(3-butenyl)acetamide.

As examples of monomers D in which the polar group is an $-OPO(R_3)(OR_2)$ group or a $-PO(OR_2)(OR_4)$ group may be mentioned the methyl, allyl ester of methyl phosphonic acid and the dimethyl ester of 3-butenyl phosphonic acid.

Examples of monomers D in which the polar group is a -CN group are 6-cyano hexene-1 and 9-cyano nonene-1.

As examples of monomers D in which the polar group is a halogen atom may be mentioned 5-chloro pentene-1 and 6-chloro hexene-1.

Novel polymers that have been prepared according to the invention are, inter alia, copolymers of carbon monoxide with a monomer D chosen from 10-undecyl alcohol and the methyl ester of 10-undecenoic acid and terpolymers of carbon monoxide and ethene with a monomer chosen from 10-undecenoic acid, allyl acetate, the methyl ester of 10-undecenoic acid, 10-indecyl alcohol an 6-chloro hexene-1.

As stated hereinbefore, the polymers of the invention, in accordance with the nature of the monomers D used, possess functional groups which can be converted at least partly into other functional groups by chemical modification.

If in the preparation of the polymers the monomer D used is a monomer in which a group $-OR_2$ is present as the polar group, this will afford polymers having alcohol or ether groups as functional groups. Heating of the polymers having ether groups will result in the separation of alcohol, to form C = C groups in the polymer side chains.

If a monomer D is used in which a group $-COR_2$ is present as the polar group, this will afford polymers having aldehyde or ketone groups as functional groups. The aldehyde and ketone groups can be converted into alcohol groups by reduction and the aldehyde groups can be converted into carboxylic acid groups by oxidation.

If in the preparation of the polymers the monomer D used is a monomer in which a group $-COOR_2$ is present as polar group, this will result in polymers having carboxylic acid groups or carboxylic acid ester groups as functional groups. By subjecting the polymers having carboxylic acid ester groups to saponification, these groups can be converted into carboxylic acid groups.

The use of a monomer D in which a group $-OCOR_2$ is present as the polar group leads to the formation of polymers having carboxylic acid ester groups as functional groups. These groups are converted into alcohol groups by subjecting these polymers to saponification.

If in the preparation of the polymers the monomers D used is a monomer in which a group $-CON(R_2)(R_4)$ or a group $-N(R_2)COR_4$ is present as polar group, this will afford polymers having amide groups as functional groups. By subjecting the polymers which have been prepared by using a monomer D in which a group $-CON(R_2)(R_4)$ is present as the polar group, the amide groups are converted into carboxylic acid groups. When the polymers prepared by using a monomer D in which a group $-N(R_2)COR_4$ is present as polar group are subjected to hydrolysis, the amide groups are converted into amine groups. The use of a monomer D in which a group $-OPO(R_3)(OR_2)$ is present as polar group leads to the formation of polymers having phosphonic acid ester groups as functional groups. When the polymers are subjected to hydrolysis, these phosphonic acid ester groups are converted into alcohol groups. If in the preparation of the polymers the monomer D used is a monomer in which a group $-PO(OR_2)(OR_4)$ is present as polar group, this will afford polymers having phosphonic acid groups or phosphonic acid ester groups as functional groups. By subjecting the polymers having phosphonic acid ester groups to saponification these groups are converted into phosphonic acid groups. The use of a monomer D in which a group -CN is present as polar group leads to the formation of polymers having cyano groups as functional groups. These cyano groups are converted into amide groups by hydrolysis of the polymers, and into carboxylic acid groups by further hydrolysis. If in the preparation of the polymers the monomer D used is a monomer in which a halogen atom is present as polar group, this will afford polymers having halogen atoms as polar groups. Hydrolysis of the polymers results in the conversion of these halogen atoms into alcohol groups. Separation of hydrogen halide from the polymers having halogen atoms as functional groups leads to the formation of C = C groups in the polymer side chains.

For the preparation of the polymers of the invention it is preferred to employ the above-mentioned catalyst compositions comprising a phosphours or nitrogen bidentate ligand. The palladium compound used in these catalyst compositions as component a) is preferably a palladium salt of a carboxylic acid and in particular palladium acetate.

As examples of acids with a pKa of less than 6 (determined in aqueous solution at 18 °C) whose anions should be present in the catalyst compositions as components b) may be mentioned, inter alia, mineral acids, such as perchloric acid, sulphuric acid, phosphoric acid and nitrous acid, sulphonic acids, such as 2-hydroxypropane-2-sulphonic acid, para-toluenesulphonic acid, methanesulphonic acid and trifluoromethanesulphonic acid, and carboxylic acids, such as triefluoroacetic acid, trichloroacetic acid,

dichloroacetic acid, difluoroacetic acid, tartaric acid and 2,5-dihydroxy benzoic acid. Preferably, the catalyst composition contains an anion of an acid with a pKa of less than 2 and in particular an anion of a sulphonic acid, such as para-toluenesulphonic acid, or an anion of a carboxylic acid, such as trifluoroacetic acid, as the component b). In the catalyst compositions component b) is preferably present in a quantity of from 0.5 to 200 and in particular of from 1.0 to 100 equivalents per gram atom of palladium. Component b) may be introduced into the catalyst compositions either in the form of an acid or in the form of a salt. Eligible salts include non-noble transition metal salts. When component b) is used as a salt of a non-noble transistion metal, preference is given to a copper salt. If component b) is applied in the catalyst compositions in the form of an acid or as a non-noble transition metal salt, then it is preferred also to incorporate a quinone as a component d) in order to enhance the activity of the catalyst compositions.1,4-Benzoquinones and 1,4-naphthaquinones are very suitable for this purpose. Optionally, components a) and b) can be combined for use in a single compound. An example of such a compound is palladium para-tosylate.

The phosphorus bidentate ligands eligible for use in the catalyst compositions as components c), have the general formula $R_6R_7$-P-R-P-$R_8R_9$, wherein $R_6$, $R_7$, $R_8$ and $R_9$ represent similar or dissimilar hydrocarbyl groups which may or may not be substituted with polar groups and R represents a bivalent organic bridging group containing at least two carbon atoms in the bridge. Preference is given to phosphorus bidentate ligands wherein $R_6$-$R_9$ represent similar or dissimilar aryl groups which may or may not be substituted with polar groups, and in particular to such phosphorus bidentate ligands in which at least one of the aryl groups has at least one polar substituent situated in a position ortho or para to phosphorus. Preference is further given to phosphorus bidentate ligands in which the polar substituents that may be present in the groups $R_6$-$R_9$ are alkoxy groups and in particular methoxy groups. Finally, preference is given to phosphorus bidentate ligands in which the groups $R_6$-$R_9$ are similar to one another and in which the bivalent organic bridging group contains three carbon atoms in the bridge. Examples of suitable phosphorus bidentate ligands are
1,3-bis(diphenyl-phosphino)propane
1,3-bis[di(4-methyl-phenyl)phosphino]propane,
1,3-bis[di(4-methoxy-phenyl)phosphino]propane,
1,3-bis[di(2-methoxy-phenyl)phosphino]propane,
1.3-bis[di(2,4-dimethoxy-phenyl)phosphino]propane,
1,3-bis[di(2,6-dimethoxy-phenyl)phosphino]propane,
and 1,3-bis[di(2,4,6-trimethoxy-phenyl)phosphino]propane

The phosphorus bidentate ligands are preferably used in the catalyst compositions in a quantity of 0.1-3, and in particular of 0.75-2, mol per mol of palladium compound.

Nitrogen bidentate ligands eligible for use in the catalyst compositions as component c), have the general formula

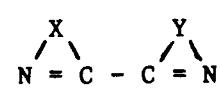

wherein X and Y represent similar or dissimilar bridging groups, each containing three or four atoms in the bridge, at least two of which are carbon atoms. In the nitrogen bidentate ligands the bridging groups X and Y are linked by the two carbon atoms shown in the general formula. In addition to this linkage, there may exist a further junction between the bridging groups X and Y, such as is the case with 1,10-phenanthroline and compounds derived therefrom. If, in addition to carbon atoms, the bridging groups X and Y contain further atoms in the bridge, these atoms are preferably nitrogen atoms. Further, preference is given to nitrogen bidentate ligands in which the bridging groups X and Y are similar. Examples of suitable nitrogen bidentate ligands are 2,2′-bipyridine and compounds derived therefrom and 1,10-phenanthroline and compounds derived therefrom. If a catalyst composition based upon a nitrogen bidentate ligand is used for the preparation of the polymers according to the invention, preference is given to the use of 2,2′-bipyridine or 1,10-phenanthroline. The nitrogen bidentate ligands are preferably used in the catalyst compositions in quantities of 0.5-200, and in particular of 1-50, mol per mol of palladium compound.

The quantity of bidentate-ligand-containing catalyst composition used in the preparation of the polymers according to the invention may vary within wide ranges. Per mol of olefinically unsaturated compound to be polymerized, such a quantity of catalyst is preferably used as to contain $10^{-7}$ to $10^{-3}$ and in particular $10^{-6}$ to $10^{-4}$ gram atom of palladium. The molar ratio of the olefinically unsaturated organic compounds relative to carbon monoxide is preferably 10:1-1:5 and in particular 5:1-1:2.

The preparation of the polymers according to the invention by using a bidentate-ligand-containing catalyst is preferably carried out at a temperature of 20-200 °C and a pressure of 1-200 bar and in particular at a temperature of 30-150 °C and a pressure of 20-100 bar. The polymerization is preferably carried out in a liquid diluent. Very suitable liquid diluents are lower alcohols, such as methanol and ethanol.

The invention will now be illustrated with the aid of the following examples.

Example 1 (Comparative Example)

A stirred autoclave of 250 ml capacity was charged with a catalyst solution comprising
50 ml of methanol,
0.1 mmol of palladium acetate,
1 mmol of para-toluenesulphonic acid,
3 mmol of 2,2′-bipyridine, and
20 mmol of 1,4-benzoquinone.

After any air present in the autoclave had been removed by evacuation, 4 bar vinyl chloride was introduced, followed by 30 bar carbon monoxide and finally 15 bar ethene. Then the contents of the autoclave were brought to 90 °C. After 5 hours the polymerization was terminated by cooling to room temperature and releasing the pressure. The polymer formed was filtered off, washed with methanol and dried in vacuo at room temperature.
2 g of a carbon monoxide/ethene copolymer was obtained.

Example 2 (Comparative Example)

A stirred autoclave of 250 ml capacity was charged with a catalyst solution comprising
30 ml of methanol,
0.1 mml of palladium acetate,
0.5 mmol of copper para-tosylate, and
0.15 mmol of 1,3-bis(diphenylphosphino)propane.

After 30 ml of methyl acrylate had been introduced into the autoclave, air was removed by evacuation and carbon monoxide was introduced with pressure until a pressure of 40 bar was reached. Then the contents of the autoclave were brought to 90 °C. After 5 hours the autoclave was cooled down to room temperature and the pressure was released. No more than a trace of polymer material was obtained.

Example 3 (Comparative Example)

A carbon monoxide/ethene/methyl acrylate terpolymer was prepared as follows. A stirred autoclave of 250 ml capacity was charged with a catalyst solution comprising
40 ml of methanol,
0.1 mmol of palladium acetate,
2 mmol of copper para-tosylate, and
0.15 mmol of 1,3-bis(diphenyl-phosphino)propane.

After 20 ml of methyl acrylate had been introduced into the autoclave, air was removed by evacuation and 25 bar carbon monoxide was introduced, followed by 25 bar ethene. Then, the contents of the autoclave were brought to 90 °C. After 5 hours the polymerization was terminated by cooling down to room temperature and releasing the pressure. The polymer was filtered off, washed with methanol and dried in vacuo at room temperature.
8.2 g of Terpolymer was obtained.
Thus, the polimerization rate was 164 g of terpolymer/g palladium/hour.

Example 4

A carbon monoxide/ethene/methyl ester of 10-undecenoic acid terpolymer was prepared substantially in the same way as the terpolymer of Example 3, except for the following differences

a) the autoclave was charged with 30 ml of methyl ester of 10-undecenoic acid instead of 20 ml of methyl acrylate, and
b) the reaction time was 1/2 hour instead of 5 hours.

7.1 g of Terpolymer was obtained. Thus, the polymerization rate was 1420 g of terpolymer/g palladium/hour.

Example 5

A carbon monoxide/ethene/10-undecenoic acid terpolymer was prepared substantially in the same way as the copolymer of Example 1, except for the following differences

a) the catalyst solution comprised 30 ml instead of 50 ml of methanol and, in addition, 30 ml of tetrahydrofuran,

b) the autoclave was charged with 20 ml of 10-undecenoic acid instead of 4 bar vinyl chloride, and

c) the reaction time was 1 hour instead of 5 hours.

5.7 g of Terpolymer was obtained.

Example 6

A carbon monoxide/ethene/6-chloro hexene-1 terpolymer was prepared substantially in the same way as the copolymer of Example 1, except for the following differences

a) the catalyst solution comprised 10 mmol instead of 20 mmol of 1,4-benzoquinone, and

b) the autoclave was charged with 20 ml of 6-chloro hexene-1 instead of 4 bar vinyl chloride.

2 9 g of Terpolymer was obtained.

Example 7

A carbon monoxide/ethene/allyl acetate terpolymer was prepared substantially in the same way as the copolymer of Example 1, except for the following differences

a) the catalyst solution comprised 40 ml instead of 50 ml of methanol, 10 mmol instead of 20 mmol of 1,4-benzoquinone and 2 mmol instead of 1 mmol of para-toluenesulphonic acid,

b) the autoclave was charged with 20 ml of allyl acetate instead of 4 bar vinyl chloride, and

c) the reaction temperature was 65 °C instead of 90 °C

6.6 g of Terpolymer was obtained.

Example 8

A carbon monoxide/ethene/10-undecenyl alcohol terpolymer was prepared substantially in the same way as the terpolymer of Example 3, except for the following differences

a) a catalyst solution was used which comprised
50 ml of methanol,
0.5 mmol of palladium acetate,
2 mmol of copper para-tosylate, and
0.75 mmol of 1,3-bis(diphenyl-phosphino)propane,

b) the autoclave was charged with 30 ml of 10-undecenyl alcohol instead of 20 ml of methyl acrylate,

c) 30 bar instead of 25 bar carbon monoxide was introduced into the autoclave, followed by
20 bar instead of 25 bar ethene,
the reaction time was 1/2 hour instead of 5 hours.

d) the reaction temperature was 65 °C instead of 90 °C, and

e) the reaction time was 1/2 instead of 5 hours.

23 g of Terpolymer was obtained.

Example 9

A carbon monoxide/methyl ester of10-undecenoic acid copolymer was prepared by substantially repeating Example 2, the differences being

a) a catalyst solution was used wich comprised
30 ml of methanol,
0.5 mmol of palladium acetate,
0.5 mmol of copper para-tosylate, and
0.75 mmol of 1,3-bis(diphenyl-phosphino)propane,

b) the autoclave was charged with 30 ml of methyl ester of 10-undecenoic acid instead of 30 ml of methyl acrylate, and

c) the reaction temperature was 50 °C instead of 90 °C

A polymer solution on methanol comprising 11 g of copolymer was obtained.

Example 10

A carbon monoxide/10-undecenyl alcohol copolymer was prepared by substantially repeating Example 2, except for the following differences:

a) a catalyst solution was used wich comprised
50 ml of methanol,
0.5 mmol of palladium acetate,
2 mmol of copper para-tosylate, and
0.75 mmol of 1,3-bis(diphenyl-phosphino)propane,

b) the autoclave was charged with 20 ml of 10-undecenyl alcohol instead of 30 ml of methyl acrylate, and

c) the reaction temperature was 70 °C instead of 90 °C

A polymer solution in methanol comprising 8 g of copolymer was obtained.

Of Examples 1-10, Examples 4-10 are examples according to the invention. In these examples carbon monoxide copolymers and carbon monoxide/ethene terpolymers were prepared by using a compound D as the second and third monomer, respectively. Examples 1-3 fall outside the scope of the invention. They have been included in the patent application for comparison. In Examples 1-3 monomer mixtures were used which, in addition to carbon monoxide and optionally ethene as the second or third monomer, comprised a compound in which a chlorine atom or a group $-COOCH_3$ was present as the polar group, linked direct to the polymerizable $CH_2=CH-$ group.

With the aid of $^{13}C$-NMR analysis it was established that the copolymers prepared by Examples 1, 9 and 10 had a linear alternating structure and were therefore made up of units of the formulae $-CO-(C_2H_4)-$, $-CO-(C_{12}H_{22}O_2)-$, and $-CO-(C_{11}H_{22}O)-$, respectively. It was further established with the aid of $^{13}C$-NMR analysis that the terpolymers prepared according to Examples 3-8 also had linear alternating structures, that they were made up of units of the formula $-CO-(C_2H_4)-$ and units of the formulae $-CO-(C_4H_6O_2)-$, $-CO-(C_{12}H_{22}O_2)-$, $-CO-(C_{11}H_{20}O_2)-$, $-CO-(C_6H_{11}Cl)-$, $-CO-(C_5H_8O_2)-$, and $-CO-(C_{11}H_{22}O)-$, respectively, and that the units mentioned occurred distributed randomly within the terpolymers.

The data obtained from $^{13}C$-NMR analysis were used to determine the average number of units of the formula $-CO-(C_2H_4)-$, occurring in each terpolymer per unit of the general formulae -CO-(B′)- or -CO-(D′)-, respectively. The values found are collected in the table.

Table

| Terpolymer prepared by Example Nr. | Average number of units of formula $-CO-(C_2H_4)-$ per unit of the general formula -CO-(B')-, or -CO-(D')-, |
|---|---|
| 3 | 23 |
| 4 | 22 |
| 5 | 48 |
| 6 | 14 |
| 7 | 18 |
| 8 | 20 |

The following may be remarked on the Examples.

Comparison of Examples 1 and 6 shows that when vinyl chloride is taken up in a carbon monoxide/ethene monomer mixture as the third monomer (which is not according to the invention), this polar monomer is not incorporated during the polymerization, whilst replacement in the monomer mixture of the vinyl chloride by 6-chloro hexene-1 (which is according to the invention) leads to the formation of a

terpolymer which contains on average one unit $-CO-(C_6H_{11}Cl)$ per 14 units $-CO-(C_2H_4)-$.

Comparison of Examples 2 and 9 shows that no polymer is obtained when the starting mixture is a carbon monoxide/methyl ester of acrylic acid monomer mixture (not according to the invention), whereas a linear alternating copolymer can be prepared by replacing the methyl ester of acrylic acid in the monomer mixture by the methyl ester of 10-undecenoic acid (which is according to the invention).

Comparison of Examples 3 and 4 shows that when the starting mixture is a carbon monoxide/ethene/methyl ester of acrylic acid monomer mixture (not according to the invention), a linear alternating terpolymer having a certain molar content of polar monomer is obtained at a certain polymerization rate, whereas replacement of the methyl ester of acrylic acid in the monomer mixture by the methyl ester of 10-undecenoic acid (which is according to the invention) results in a linear alternating terpolymer with an almost similar molar content of polar monomer but which is formed at a considerably higher polymerization rate.

**Claims**

**Claims for the following Contracting States : AT, BE, CH, DE, FR, GB, IT, NL, SE**

1. polymers of carbon monoxide with one or more $\alpha$-olefinically unsaturated compounds, wherein
   a) the polymers are prepared by the polymerization with one or more compounds (D) comprising a group of the general formula $(CH_2=CR_1)-$ which is bound by a bivalent hydrocarbyl bridging group to a monovalent polar group having at least one oxygen, nitrogen, phosphorus and/or halogen atom and, optionally also with one or more compounds (A) of the general formula $(CH_2=CR_1)-R_2$, in which formulae $R_1$ and $R_2$ represent hydrogen atoms and/or monovalent hydrocarbyl groups,
   b) the polymers have a linear structure,
   c) the polymers are made up of units of the general formula -CO-(D')-and optionally also units of the general formula -CO-(A')-, wherein A' and D' represent monomer units originating from monomers A and D, respectively, used.

2. Polymers as claimed in claim 1, characterized in that in the monomers D used a $-(CH_2)_n-$ group, in which n is lower than 10, is present as the bivalent organic bridging group.

3. Polymers as claimed in claim 1 or 2, characterized in that in the monomers D used a monovalent polar group is present which is chosen from $-OR_2$,
   $-COR_2$, $-COOR_2$, $-OCOR_2$, $-CON(R_2)(R_4)$, $-N(R_2)COR_4$,
   $OPO(R_3)(OR_2)$, $-PO(OR_2)(OR_4)$, -CN and -Halogens, wherein $R_3$ represents a hydrocarbyl group and $R_4$ a hydrogen atom or a hydrocarbyl group.

4. Polymers as claimed in claim 3, characterized in that in the monomers D used a monovalent polar group is present which is chosen from -OH, -COOH, $-COOCH_3$, $-OCOCH_3$ and -Cl.

5. Polymers as claimed in claims 1-4, characterized in that the monomer D used is a compound which is chosen from 10-undecenyl alcohol, 10-undecenoic acid, the methyl ester of 10-undecenoic acid, allyl acetate and 6-chloro hexene-1.

6. Polymers as claimed in one or more of claims 1-5, characterized in that monomer A is ethene.

7. Process for the preparation of polymers as claimed in anyone of claims 1 to 6, wherein a mixture of carbon monoxide with one or more compounds D and optionally also one or more compounds A is polymerized by using a catalyst composition based upon
   a) a palladium compound,
   b) an anion of an acid with a pKa of less than 6, and
   c) either a phosphorus bidentate ligand of the general formula $R_6R_7P-R-PR_8R_9$, wherein $R_6$-$R_9$ are similar or dissimilar hydrocarbyl groups which may or may not be substituted with polar groups and R is a bivalent organic bridging group containing at least two carbon atoms in the bridge, or a nitrogen bidentate ligand of the general formula

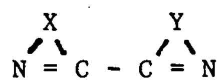

wherein X and Y represent similar or dissimilar bridging groups each containing three or four atoms in the bridge at least two of which are carbon atoms.

**8.** Process as claimed in claim 7, characterized in that a catalyst composition is used which is based upon an anion of an acid with a pKa of less than 2, as the component b).

**9.** Process as claimed in claim 7 or 8, characterized in that a catalyst composition is used in which component b) is included in the form of an acid or a copper salt thereof, or which in addition comprises a 1,4-benzoquinone or a 1,4-naphthaquinone, as a component d).

**10.** Process as claimed in anyone of claims 7 to 9, characterized in that a catalyst composition is used which comprises as the component c) a phosphorus bidentate ligand comprising an alkoxy group substituent in at least one of the groups $R_6$-$R_9$.

**Claims for the following Contracting States : ES, GR**

**1.** Process for the preparation of polymers of carbon monoxide with one or more $\alpha$-olefinically unsaturated compounds, wherein

a) one or more compounds (D) comprising a group of the general formula $(CH_2=CR_1)$- which is bound by a bivalent hydrocarbyl bridging group to a monovalent polar group having at least one oxygen, nitrogen, phosphorus and/or halogen atom and, optionally also one or more compounds (A) of the general formula $(CH_2=CR_1)$-$R_2$, in which formulae $R_1$ and $R_2$ represent hydrogen atoms and/or monovalent hydrocarbyl groups, are polymerized with carbon monoxide,

b) the polymers have a linear structure,

c) the polymers are made up of units of the general formula -CO-(D')- and optionally also units of the general formula -CO-(A')-, wherein A' and D' represent monomer units originating from monomers A and D, respectively, used.

**2.** Process as claimed in claim 1, characterized in that in the monomers D used a - $(CH_2)_n$- group, in which n is lower than 10, is present as the bivalent organic bridging group.

**3.** Process as claimed in claim 1 or 2, characterized in that in the monomers D used a monovalent polar group is present which is chosen from -$OR_2$,
-$COR_2$, -$COOR_2$, -$OCOR_2$, -$CON(R_2)(R_4)$, -$N(R_2)COR_4$,
$OPO(R_3)(OR_2)$, -$PO(OR_2)(OR_4)$, -CN and -Halogens, wherein $R_3$ represents a hydrocarbyl group and $R_4$ a hydrogen atom or a hydrocarbyl group.

**4.** Process as claimed in claim 3, characterized in that in the monomers D used a monovalent polar group is present which is chosen from -OH, -COOH, -$COOCH_3$, -$OCOCH_3$ and -Cl.

**5.** Process as claimed in claims 1-4, characterized in that the monomer D used is a compound which is chosen from 10-undecenyl alcohol, 10-undecenoic acid, the methyl ester of 10-undecenoic acid, allyl acetate and 6-chloro hexene-1.

**6.** Process as claimed in one or more of claims 1-5, characterized in that monomer A is ethene.

**7.** Process as claimed in any one of claims 1 to 6, wherein a mixture of carbon monoxide with one or more compounds D and optionally also one or more compounds A is polymerized by using a catalyst composition based upon

a) a palladium compound,

b) an anion of an acid with a pKa of less than 6, and

c) either a phosphorus bidentate ligand of the general formula $R_6R_7P$-R-$PR_8R_9$, wherein $R_6$-$R_9$ are similar or dissimilar hydrocarbyl groups which may or may not be substituted with polar groups and

R is a bivalent organic bridging group containing at least two carbon atoms in the bridge, or a nitrogen bidentate ligand of the general formula

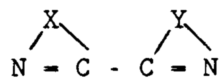

wherein X and Y represent similar or dissimilar bridging groups each containing three or four atoms in the bridge at least two of which are carbon atoms.

**8.** Process as claimed in claim 7, characterized in that a catalyst composition is used which is based upon an anion of an acid with pKa of less than 2, as the component b).

**9.** Process as claimed in claim 7 or 8, characterized in that a catalyst composition is used in which component b) is included in the form of an acid or a copper salt thereof, or which in addition comprises a 1,4-benzoquinone or a 1,4-naphthaquinone, as a component d).

**10.** Process as claimed in any one of claims 7 to 9, characterized in that a catalyst composition is used which comprises as the component c) a phosphorus bidentate ligand comprising an alkoxy group substituent in at least one of the groups $R_6$-$R_9$.

**Patentansprüche**

**Patentansprüche für folgende Vertragsstaaten : AT, BE, CH, DE, FR, GB, IT, NL, SE**

**1.** Polymere von Kohlenmonoxide mit einer oder mit mehreren $\alpha$-olefinisch ungesättigten Verbindungen, worin

a) die Polymere durch die Polymerisation mit einer oder mit mehreren Verbindungen (D), die eine Gruppe der allgemeinen Formel ($CH_2=CR_1$)- umfassen, die über eine zweiwertige Hydrocarbylbrükkengruppe an eine einwertige polare Gruppe mit wenigstens einem Sauerstoff-, Stickstoff-, Phosphor- und/oder Halogenatom gebunden ist, und gegebenenfalls auch mit einer oder mit mehreren Verbindungen (A) der allgemeinen Formel ($CH_2=CR_1$)-$R_2$ hergestellt werden, in welchen Formeln $R_1$ und $R_2$ Wasserstoffatome und/oder einwertige Hydrocarbylgruppen darstellen,

b) die Polymere eine lineare Struktur aufweisen,

c) die Polymere aus Einheiten mit der allgemeinen Formel -CO-(D')- und gegebenenfalls auch aus Einheiten mit der allgemeinen Formel -CO-(A')- bestehen, worin A' und D' Monomereinheiten darstellen, die von den verwendeten Monomeren A bzw. D abstammen.

**2.** Polymere nach Anspruch 1, dadurch gekennzeichnet, daß in den verwendeten Monomeren D eine $-(CH_2)_n$-Gruppe, worin n kleiner als 10 ist, als die zweiwertige organische Brückengruppe vorliegt.

**3.** Polymere nach Anspruch 1 oder 2, dadurch gekennzeichnet, daß in den verwendeten Monomeren D eine einwertige polare Gruppe vorliegt, die unter $-OR_2$, $-COR_2$, $-COOR_2$, $-OCOR_2$, $-CON(R_2)(R_4)$, $-N(R_2)COR_4$, $-OPO(R_3)(OR_2)$, $-PO(OR_2)(OR_4)$, -CN und -Halogenen ausgewählt ist, worin $R_3$ eine Hydrocarbylgruppe darstellt und $R_4$ Wasserstoff oder eine Hydrocarbylgruppe bedeutet.

**4.** Polymere nach Anspruch 3, dadurch gekennzeichnet, daß in den verwendeten Monomeren D eine einwertige polare Gruppe vorliegt, die unter -OH, -COOH, $-COOCH_3$, $-OCOCH_3$ und -Cl ausgewählt ist.

**5.** Polymere nach den Ansprüchen 1 bis 4, dadurch gekennzeichnet, daß das verwendete Monomer D eine Verbindung ist, die Unter 10-Undecenylalkohol, 10-Undecensaüre, dem Methylester von 10-Undecensäure, Allylacetat und 6-Chlorhexen-1 ausgewählt ist.

**6.** Polymere nach einem oder mehreren der Ansprüche 1 bis 5, dadurch gekennzeichnet, daß das Monomer A Ethen ist.

**7.** Verfahren zur Herstellung von Polymeren nach einem der Ansprüche 1 bis 6, worin ein Gemisch von Kohlenmonoxid mit einer oder mit mehreren Verbindungen D und gegebenenfalls auch mit einer oder mit mehreren Verbindungen A unter Verwendung einer Katalysatorzusammensetzung polymerisiert

wird, die auf

a) einer Palladiumverbindung,

b) einem Anion einer Säure mit einem pKa-Wert von kleiner als 6 und

c) entweder einem Phosphorbidentatliganden der allgemeinen Formel $R_6R_7P\text{-}R\text{-}PR_8R_9$, worin $R_6$ bis $R_9$ gleiche oder verschiedene Hydrocarbylgruppen darstellen, die durch polare Gruppen substituiert oder unsubstituiert sein können und R eine zweiwertige organische Brückengruppe bedeutet, die wenigstens zwei Kohlenstoffatome in der Brücke enthält, oder einem Stickstoffbidentatliganden der allgemeinen Formel

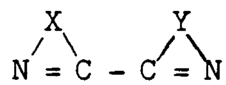

basiert, worin X und Y gleiche oder verschiedene Brückengruppen darstellen, die jeweils drei oder vier Atome in der Brücke enthalten, von denen wenigstens zwei Kohlenstoffatome sind.

**8.** Verfahren nach Anspruch 7, dadurch gekennzeichnet, daß eine Katalysatorzusammensetzung verwendet wird, die auf einem Anion einer Säure mit einem pKa-Wert von weniger als 2 als der Komponente b) beruht.

**9.** Vertfahren nach Anspruch 7 oder 8, dadurch gekennzeichnet, daß eine Katalysatorzusammensetzung verwendet wird, worin die Komponente b) in Form einer Säure oder eines Kupfersalzes hievon enthalten ist, oder die zusätzlich ein 1,4-Benzochinon oder ein 1,4-Napthachinon als eine Komponente d) umfaßt.

**10.** Vertfahren nach einem der Ansprüche 7 bis 9, dadurch gekennzeichnet, daß eine Katalysatorzusammensetzung verwendet wird, die als Komponente c) einen Phosphorbidentatliganden unfaßt, der in wenigstens einer der Gruppen $R_6$ bis $R_9$ einen Alkoxygruppensubstituenten aufweist.

**Patentansprüche für folgende Vertragsstaaten : ES, GR**

**1.** Verfahren zur Herstellung von Polymeren von Kohlenmonoxid mit einer oder mit mehreren $\alpha$-olefinisch ungesättigten Verbindungen, worin

a) eine oder mehrere Vverbindungen (D), die eine Gruppe der allgemeinen Formel $(CH_2=CR_1)$ umfassen, die über eine zweiwertige Hydrocarbylbrückengruppe an eine einwertige polare Gruppe mit wenigstens einem Sauerstoff-, Stickstoff, Phosphor- und/oder Halogenatom gebunden ist, und gegebenenfalls auch mit einer oder mit mehreren Verbindungen (A) mit der allgemeinen Formel $(CH_2=CR_1)\text{-}R_2$, in welchen Formeln $R_1$ und $R_2$ Wasserstoffatome und/oder einwertige Hydrocarbylgruppen bedeuten, mit Kohlenmonoxid polymerisiert werden,

b) die Polymere eine lineare Struktur aufweisen,

c) die Polymere aus Einheiten mit der allgemeinen Formel -CO-(D')- und gegebenenfalls auch aus Einheiten mit der allgemeinen Formel -CO-(A')- bestehen, worin A' und D' Monomereinheiten darstellen, die von den verwendeten Monomeren A bzw. D abstammen.

**2.** Verfahren nach Anspruch 1, dadurch gekennzeichnet, daß in den verwendeten Monomeren D eine $-(CH_2)_n$-Gruppe, worin n kleiner als 10 ist, als die zweiwertige organische Brückengruppe vorliegt.

**3.** Verfahren nach Anspruch 1 oder 2, dadurch gekennzeichnet, daß in den verwendeten Monomeren D eine einwertige polare Gruppe vorliegt, die unter $-OR_2$, $-COR_2$, $-COOR_2$, $-OCOR_2$, $-CON(R_2)(R_4)$, $-N(R_2)COR_4$, $-OPO(R_3)(OR_2)$, $-PO(OR_2)(OR_4)$, -CN und -Halogenen ausgewählt ist, worin $R_3$ eine Hydrocarbylgruppe darstellt und $R_4$ Wasserstoff oder eine Hydrocarbylgruppe bedeutet.

**4.** Verfahren nach Anspruch 3, dadurch gekennzeichnet, daß in den verwendeten Monomeren D eine einwertige polare Gruppe vorliegt, die unter -OH, -COOH, $-COOCH_3$, $-OCOCH_3$ und -Cl ausgewählt ist.

**5.** Verfahren nach den Ansprüchen 1 bis 4, dadurch gekennzeichnet, daß das verwendete Monomer D eine Verbindung ist, die unter 10-Undecenylalkohol, 10-Undecensäure, dem Methylester von 10-Undecensäure, Allylacetat und 6- Chlorhexen-1 ausgewählt ist.

**6.** Verfahren nach einem oder mehreren der Ansprüche 1 bis 5, dadurch gekennzeichnet, daß das Monomer A Ethen ist.

**7.** Verfahren nach einem der Ansprüche 1 bis 6, worin ein Gemisch von Kohlenmonoxid mit einer oder mit mehreren Verbindungen D und gegebenenfalls auch mit einer oder mit mehreren Verbindungen A unter Verwendung einer Katalysatorzusammensetzung polymerisiert wird, die auf

a) einer Palladiumverbindung,

b) einem Anion einer Säure mit einem pKa-Wert von kleiner als 6 und

c) entweder einem Phosphorbidentatliganden der allgemeinen Formel $R_6R_7P\text{-}R\text{-}PR_8R_9$, worin $R_6$ bis $R_9$ gleiche oder verschiedene Hydrocarbylgruppen darstellen, die durch polare Gruppen substituiert oder unsubstituiert sein können und R eine zweiwertige organische Brückengruppe bedeutet, die wenigstens zwei Kohlenstoffatome in der Brücke enthält, oder einem Stickstoffbidentatliganden der allgemeinen Formel

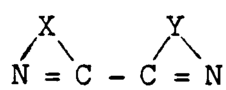

basiert, worin X und Y gleiche oder verschiedene Brückengruppen darstellen, die jeweils drei oder vier Atome in der Brücke enthalten, von denen wenigstens zwei Kohlenstoffatome sind.

**8.** Verfahren nach Anspruch 7, dadurch gekennzeichnet, daß eine Katalysatorzusammensetzung verwendet wird, die auf einem Anion einer Säure mit einem pKa-Wert von weniger als 2 als der Komponente b) beruht.

**9.** Verfahren nach Anspruch 7 oder 8, dadurch gekennzeichnet, daß eine Katalysatorzusammensetzung verwendet wird, worin die Komponente b) in Form einer Säure oder eines Kupfersalzes hievon enthalten ist, oder die zusätzlich ein 1,4-Benzochinon oder ein 1,4-Naphthachinon als eine Komponente d) umfaßt.

**10.** Verfahren nach einem der Ansprüche 7 bis 9, dadurch gekennzeichnet, daß eine Katalysatorzusammensetzung verwendet wird, die als Komponente c) einen Phosphorbidentatliganden umfaßt, der in wenigstens einer der Gruppen $R_6$ bis $R_9$ einen Alkoxygruppensubstituenten aufweist.

**Revendications**

**Revendications pour les Etats contractants suivants : AT, BE, CH, DE, FR, GB, IT, NL, SE**

**1.** Polymères d'oxyde de carbone avec un ou plusieurs composés à insaturation oléfinique en $\alpha$, dans lesquels

a) les polymères sont préparés par la polymérisation d'un ou plusieurs composés (D) comportant un groupe de formule générale $(CH_2=CR_1)$- qui est lié par un groupe de pontage hydrocarbyle bivalent à un groupe polaire monovalent ayant au moins un atome d'oxygène, d'azote, de phosphore et/ou d'halogène, et éventuellement aussi d'un ou plusieurs composés (A) de formule générale $(CH_2=CR_1)\text{-}R_2$, $R_1$ et $R_2$ dans ces formules représentant des atomes d'hydrogène et/ou des groupes hydrocarbyles monovalents,

b) les polymères ont une structure linéaire,

c) les polymères sont constitués d'unités de formule générale -CO-(D')-, et éventuellement aussi d'unités de formule générale -CO-(A')-, où A' et D' représentent des unités monomères provenant des monomères A et D respectivement utilisés.

**2.** Polymères tels que revendiqués dans la revendication 1, caractérisés en ce que, dans les monomères D utilisés, est présent un groupe $-(CH_2)_n-$, dans lequel n est inférieur à 10, comme groupe de pontage organique bivalent.

**3.** Polymères tels que revendiqués dans la revendication 1 ou la revendication 2, caractérisés en ce que

dans les monomères D utilisés, se trouve un groupe polaire monovalent qui est choisi parmi $-OR_2$, $-COR_2$, $-COOR_2$, $-OCOR_2$, $-CON(R_2)(R_4)$, $-N(R_2)COR_4$,$OPO(R_3)(OR_2)$, $-PO(OR_2)(OR_4)$, -CN et -halogènes, où $R_3$ représente un groupe hydrocarbyle et $R_4$ représente un atome d'hydrogène ou un groupe hydrocarbyle.

4. Polymères tels que revendiqués dans la revendication 3 caractérisés en ce que dans les monomères D utilisés se trouve un groupe polaire monovalent qui est choisi parmi -OH, -COOH, $-COOCH_3$, $-OCOCH_3$ et -Cl.

5. Polymères tels que revendiqués dans les revendications 1 - 4, caractérisés en ce que le monomère D utilisé est un composé qui est choisi parmi l'alcool 10-undécénylique, l'acide 10-undécénoîque, l'ester méthylique de l'acide 10-undécénoîque, l'acétate d'allyle et le 6-chloro héxène-1.

6. Polymères tels que revendiqués dans une ou plusieurs des revendications 1-5, caractérisés en ce que le monomère A est l'éthène.

7. Procédé pour la préparation de polymères tels que revendiqués dans l'une quelconque des revendications 1 à 6, dans lequel on polymérise un mélange d'oxyde de carbone et d'un ou plusieurs composés D, et éventuellement un ou plusieurs composés A, en utilisant une composition catalytique basée sur
   a) un composé de palladium,
   b) un anion d'un acide ayant un pKa inférieur à 6, et
   c) soit un ligand bidenté phosphoré de formule générale $R_6R_7P\text{-}R\text{-}PR_8R_9$, où $R_6$-$R_9$ sont des groupes hydrocarbyles semblables ou différents, qui peuvent être ou non substitués avec des groupes polaires, et R est un groupe de pontage organique bivalent contenant au moins deux atomes de carbone dans le pont, ou un ligand bidenté azoté de formule générale

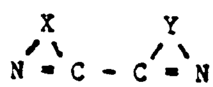

   où X et Y représentent des groupes de pontage semblables ou différents contenant chacun 3 ou 4 atomes dans le pont et au moins 2 de ceux-ci étant des atomes de carbone.

8. Procédé tel que revendiqué dans la revendication 7, caractérisé en ce que l'on utilise une composition catalytique qui est basée sur un anion d'un acide ayant un pKa inférieur à 2, comme composant b).

9. Procédé tel que revendiqué dans les revendications 7 ou 8, caractérisé en ce que l'on utilise une composition catalytique dans laquelle le composant b) est inclus sous la forme d'un acide ou d'un sel de cuivre de celui-ci, ou qui comporte en plus la 1,4-benzoquinone ou une 1,4-naphtaquinone, comme composant d).

10. Procédé tel que revendiqué dans l'une quelconque des revendications 7 à 9, caractérisé en ce que l'on utilise une composition catalytique qui comporte comme composant c) un ligand bidenté phosphoré comportant comme substituant un groupe alcoxy dans au moins un des groupes $R_6$-$R_9$.

**Revendications pour les Etats contractants suivants : ES, GR**

1. Procédé pour la préparation de polymères d'oxyde de carbone avec un ou plusieurs composés à insaturation $\alpha$-oléfinique, dans lequel
   a) on polymérise avec l'oxyde de carbone un ou plusieurs composés (D) comportant un groupe de formule générale $(CH_2=CR_1)$- qui est lié par un groupe de pontage hydrocarbyle bivalent à un groupe polaire monovalent ayant au moins un atome d'oxygène, d'azote, de phosphore et/ou d'halogène, et éventuellement aussi un ou plusieurs composés (A) de formule générale $(CH_2=CR_1)$-$R_2$ $R_1$ et $R_2$ dans ces formules représentant des atomes d'hydrogène et/ou des groupes hydrocarbyles monovalents
   b) les polymères ont une structure linéaire,
   c) les polymères sont constitués d'unités de formule générale -CO-(D')- et éventuellement aussi

d'unités de formule générale -CO-(A')- dans lesquelles A' et D' représentent des unités de monomères provenant des monomères A et D, respectivement utilisés.

**2.** Procédé tel que revendiqué dans la revendication 1, caractérisé en ce que dans les monomères D utilisés, un groupe - $(CH_2)_n$-, dans lequel n est inférieur à 10, est présent comme groupe de pontage organique bivalent.

**3.** Procédé tel que revendiqué dans la revendication 1 ou 2, caractérisé en ce que dans les monomères D utilisés, se trouve présent un groupe polaire monovalent qui est choisi parmi $-OR_2$, $-COR_2$, $-COOR_2$, $-OCOR_2$, $-CON(R)(R_4)$, $-N(R_2)COR_4$, $OPO(R_3)(OR_2)$, $-PO(OR_2)(OR_4)$, -CN et les halogènes,
où $R_3$ représente un groupe hydrocarbyle et $R_4$ représenteun atome d'hydrogène ou un groupe hydrocarbyle.

**4.** Procédé tel que revendiqué dans la revendication 3, caractérisé en ce que dans les monomères D utilisés, se trouve présent un groupe polaire monovalent, qui est choisi parmi -OH, -COOH, $-COOCH_3$, $-OCOCH_3$ et -Cl.

**5.** Procédé tel que revendiqué dans les revendications 1 à 4, caractérisé en ce que le monomère D utilisé est un composé qui est choisi parmi l'alcool 10-undécénylique, l'acide 10-undécénoîque, l'ester méthylique de l'acide 10-undécénoîque, l'acétate d'allyle et le 6-chloro-hexène-1.

**6.** Procédé tel que revendiqué dans une ou plusieurs des revendications 1 à 5, caractérisé en ce que le monomère A est l'éthène.

**7.** Procédé tel que revendiqué dans l'une quelconque des revendications 1 à 6, dans lequel on polymérise un mélange d'oxyde de carbone avec un ou plusieurs composés D et éventuellement aussi avec un ou plusieurs composés A en utilisant une composition catalytique à base de
a) un composé de palladium,
b) un anion d'un acide avec un pKa inférieur à 6, et
c) soit un ligand bidenté de phosphore de formule générale $R_6R_7P\text{-}R\text{-}PR_8R_9$, dans laquelle $R_6$ à $R_9$ sont des groupes hydrocarbyles semblables ou différents qui peuvent être ou non substitués avec des groupes polaires et R est un groupe de pontage organique bivalent contenant au moins deux atomes de carbone dans le pont, ou un ligand bidenté d'azote de formule générale

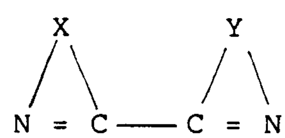

dans laquelle X et Y représentent des groupes de pontage semblables ou différents, chacun contenant trois ou quatre atomes dans le pont, dont deux d'entre eux au moins sont des atomes de carbone.

**8.** Procédé tel que revendiqué dans la revendication 7, caractérisé en ce que l'on utilise une composition catalytique qui est à base d'un anion d'un acide avec un pKa inférieur à 2, comme composant b).

**9.** Procédé tel que revendiqué dans la revendication 7 ou 8, caractérisé en ce que l'on utilise une composition catalytique dans laquelle le composant b) est présent sous la forme d'un acide ou d'un sel de cuivre de cet acide, ou qui en plus comprend une 1,4-benzoquinone ou une 1,4-naphtaquinone, comme composant d).

**10.** Procédé tel que revendiqué dans l'une quelconque des revendications 7 à 9, caractérisé en ce que l'on utilise une composition catalytique, qui comporte comme composent c) un ligand phosphoré bidenté comportant un groupe alcoxy de substitution dans au moins un des groupes $R_6$ à $R_9$.